# EUROPEAN PATENT APPLICATION

(11) **EP 4 317 038 A1**
(43) Date of publication of application: **07.02.2024**
(21) Application number: 22780562.9
(22) Date of filing: 25.03.2022
(51) Int. Cl.: B65H 5/08, B25J 15/06

(54) **TRANSPORT DEVICE, DISCHARGE RECTIFICATION COVER, AND SKIRT**

(30) Priority: 01.04.2021 JP 2021063054
(71) Applicant: Harmotec Co., Ltd., Kofu City Yamanashi 400-0851 (JP)
(72) Inventor: IWASAKA Hitoshi, Kofu City, Yamanashi 400-0851 (JP); TOKUNAGA Hideyuki, Kofu City, Yamanashi 400-0851 (JP); KOSHIISHI Katsuhiro, Kofu City, Yamanashi 400-0851 (JP); TANAKA Hidemitsu, Kofu City, Yamanashi 400-0851 (JP); KASAI Yuji, Kofu City, Yamanashi 400-0851 (JP); IWASAKA Naonari, Kofu City, Yamanashi 400-0851 (JP)
(74) Representative: Haseltine Lake Kempner LLP
(86) International application number: PCT/JP2022/014341
(87) International publication number: WO 2022/210349

(57) **Abstract**

The present invention improves a suction power of conveyance equipment. Conveyance equipment comprises a swirl flow-forming body, a discharge fluid rectification cover and a skirt. The swirl flow-forming body has a columnar first body. A columnar recess is provided inward of the lower end face of the first body. A pair of fluid passages are formed in the columnar first body to extend generally tangential to the inside surface of the columnar recess and supply fluid into the columnar recess to generate a swirling flow. The discharge fluid rectification cover has a second body which is comprised of a disk-shaped base plate and a peripheral wall that extends around the periphery of the base plate. The second body is positioned to cover the columnar recess. A suction port is provided in the bottom plate. A discharge passage is provided in the peripheral wall to extend generally tangential to the inside surface of the peripheral wall. The skirt is cylindrical and is made of an elastic thin film, a top opening of which is connected to the suction port.

## Description

### TECHNICAL FIELD

The present invention relates to conveyance equipment, and to a discharge fluid rectification cover and skirt for the conveyance equipment.

### BACKGROUND ART

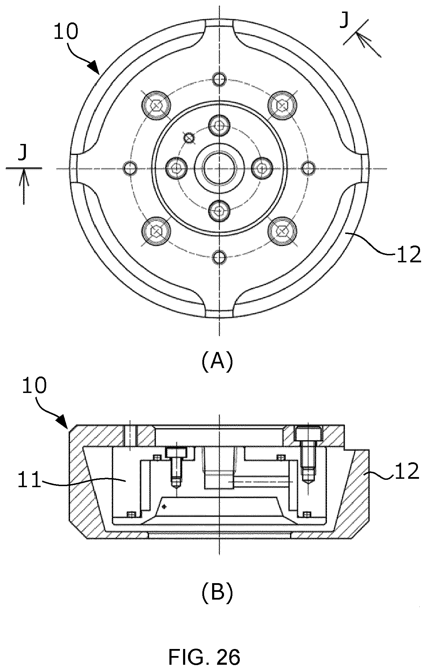

Patent Document 1 describes Suction Device 10 for suctioning excess oil from fried food or for suctioning excess water from food boiled in water. Figure 26(A) is a plan view of Suction Device 10, and Figure 26(B) is a J-J line cross-section view of Figure 26(A). As shown in these figures, Suction Device 10 has Swirl Flow-Forming Body 11 and Case 12 that houses Swirl Flow-Forming Body 11.

Swirl Flow-Forming Body 11 of Suction Device 10 suctions an object by utilizing Bernoulli's principle. Specifically, Swirl Flow-Forming Body 11 discharges fluid into a recess formed in an underside of the body to generate a swirl flow, and a central negative pressure of the generated swirl flow suctions the object. Case 12 is a member that guides upward the fluid that flows out of the recess in Swirl Flow-Forming Body 11. Suction Device 10 with Swirl Flow-Forming Body 11 and Case 12 can reduce collision of the suctioned object and the ejected fluid.

### PRIOR ART DOCUMENT

### PATENT DOCUMENT

Patent Document 1: JP2017-35350A

### SUMMARY OF THE INVENTION

### PROBLEM TO BE SOLVED BY THE INVENTION

The present invention has been made in view of the above-described background and aims to improve a suction force of conveyance equipment.

### MEANS FOR SOLVING THE PROBLEM

To solve the problem described above, the present invention provides conveyance equipment comprising: a swirl flow-forming body which forms a swirl flow of fluid, and a cover attached to a lower end of the swirl flow-forming body which rectifies a discharged fluid, wherein the swirl flow-forming body has a first body which is a columnar member, a columnar recess provided inward of a lower end face of the first body, a pair of fluid passages that extend generally tangential to an inside surface of the columnar recess, the swirl flow-forming body forms a swirl flow of fluid by discharging fluid into the columnar recess through the pair of fluid passages, the cover has a second body composed of a disk-shaped bottom plate and a cylindrical member that extends from a periphery of the bottom plate to cover the columnar recess, a suction port provided in the bottom plate, and a discharge passage that extends generally tangential to the inside surface of the cylindrical member of the second body.

The present invention also provides conveyance equipment comprising: a swirl flow-forming body which forms a swirl flow of fluid, and a cover attached to a lower end of the swirl flow-forming body which rectifies discharged fluid, wherein the swirl flow-forming body has a first body which is a columnar member, a columnar recess provided inward of a lower end face of the first body, a pair of fluid passages that extend generally tangential to an inside surface of the columnar recess, the swirl flow-forming body forms a swirl flow of fluid by discharging fluid into the columnar recess through the pair of fluid passages, the cover has a second body composed of a disk-shaped bottom plate and a cylindrical member that extends from a periphery of the bottom plate to cover the columnar recess, a suction port provided in the bottom plate, and a discharge passage that extends in a generally radial direction of the inside surface of the cylindrical member of the second body, further comprising: a guide wall which is an L-shaped wall that extends from the bottom plate, a base of which is connected to an inner opening edge of the discharge passage and a tip of which is positioned between the discharge passage and the suction port to guide fluid flowing in the second body into the discharge passage.

The present invention also provides conveyance equipment comprising: a columnar member, wherein a columnar recess is provided inward of a lower end face of the columnar member, and a pair of fluid passages which supply fluid into the columnar recess to form a swirling flow extend generally tangential to the inside surface of the columnar recess, further comprising a disk-shaped bottom plate, and a peripheral wall that extends around a periphery of the base plate to cover the columnar recess, wherein a suction port is provided in the bottom plate, and an outlet passage is provided in the peripheral wall to extends generally tangential to the inside surface of the peripheral wall.

The present invention also provides conveyance equipment comprising: a swirl flow-forming body which forms a swirl flow of fluid, and a skirt attached to a lower end of the swirl flow-forming body, wherein the swirl flow-forming body is comprised of a disk-shaped base plate, a cylindrical peripheral wall that extends around a periphery of the bottom plate, and a lid which covers an upper opening of the cylindrical peripheral wall with a gap between the lid and the cylindrical peripheral wall, a suction port provided in the bottom plate, a pair of fluid passages that extend generally tangential to an inside surface of the cylindrical peripheral wall and supply fluid into the cylindrical peripheral wall to form a swirling flow, and the skirt is a cylindrical member made of an elastic thin film, a top opening of which is connected to the suction port.

The present invention also provides a cover attached to a lower end of a swirl flow-forming body which comprises a first body, comprising: a second body, wherein the first body is columnar, a columnar recess is provided inward of a lower end face of the first body, and a pair of fluid passages which supply fluid into the columnar recess to form a swirling flow extend generally tangential to the inside surface of the columnar recess, the second body comprises a disk-shaped bottom plate, and a peripheral wall that extends around a periphery of the base plate to cover the columnar recess, a suction port provided in the bottom plate, and an outlet passage provided in the peripheral wall to extend generally tangential to the inside surface of the peripheral wall.

The present invention also provides a cover attached to a lower end of a swirl flow-forming body which comprises a first body, comprising: a second body, and a guide wall, wherein the first body is columnar, a columnar recess is provided inward of a lower end face of the first body, and a pair of fluid passages which supply fluid into the columnar recess to form a swirling flow extend generally tangential to the inside surface of the columnar recess, the second body comprises a disk-shaped bottom plate, and a peripheral wall that extends around a periphery of the base plate to cover the columnar recess, a suction port provided in the bottom plate, an outlet passage provided in the peripheral wall to extend generally tangential to the inside surface of the peripheral wall, and the guide wall is an L-shaped wall that extends from the bottom plate, a base of which is connected to an inner opening edge of the discharge passage and a tip of which is positioned between the discharge passage and the suction port to guide fluid flowing in the second body into the discharge passage.

The present invention also provides a skirt attached to a lower end of a cover attached to a lower end of a swirl flow-forming body, wherein the swirl flow-forming body comprises a first body which is columnar, a columnar recess provided inward of a lower end face of the first body, a pair of fluid passages which supply fluid into the columnar recess to form a swirling flow extend generally tangential to the inside surface of the columnar recess, the cover comprises a second body which is composed of a disk-shaped bottom plate, and a peripheral wall that extends around a periphery of the base plate to cover the columnar recess, a suction port is provided in the bottom plate, an outlet passage provided in the peripheral wall extends generally tangential to the inside surface of the peripheral wall, and the skirt is a cylindrical member made of an elastic thin film, a top opening of which is connected to the suction port.

The present invention also provides a skirt attached to a lower end of a swirl flow-forming body which forms a swirl flow of fluid, wherein the swirl flow-forming body is comprised of a disk-shaped base plate, a cylindrical peripheral wall that extends around a periphery of the bottom plate, and a lid which covers an upper opening of the cylindrical peripheral wall with a gap between the lid and the cylindrical peripheral wall, a suction port is provided in the bottom plate, a pair of fluid passages extend generally tangential to an inside surface of the cylindrical peripheral wall and supply fluid into the cylindrical peripheral wall to form a swirling flow, and the skirt is a cylindrical member made of an elastic thin film, a top opening of which is connected to the suction port.

### EFFECTS OF THE INVENTION

According to the present invention, a suction force of conveyance equipment is improved.

### BRIEF EXPLANATION OF THE DRAWINGS

[FIG. 1] Figure 1 is an oblique view of Conveyance Equipment 100 as viewed from above.
[FIG. 2] Figure 2 is an oblique view of Conveyance Equipment 100 as viewed from below.
[FIG. 3] Figure 3 is a plan view of Conveyance Equipment 100.
[FIG. 4] Figure 4 is a side view of Conveyance Equipment 100.
[FIG. 5] Figure 5 is a cross-sectional view of Conveyance Equipment 100 cut at line A-A in Figure 3.
[FIG. 6] Figure 6 is a cross-sectional view of Conveyance Equipment 100 cut at line B-B in Figure 3.
[FIG. 7] Figure 7 is a plan view of Swirl Flow-Forming Body 1.
[FIG. 8] Figure 8 is a cross-sectional view of Swirl Flow-Forming Body 1 cut at line C-C in Figure 7.
[FIG. 9] Figure 9 is a cross-sectional view of Swirl Flow-Forming Body 1 cut at line D-D in Figure 8.
[FIG. 10] Figure 10 is an oblique view of Discharge Fluid Rectification Cover 2 as viewed from above.
[FIG. 11] Figure 11 is an oblique view of Discharge Fluid Rectification Cover 2 as viewed from below.
[FIG. 12] Figure 12 is a plan view of Discharge Fluid Rectification Cover 2.
[FIG. 13] Figure 13 is a side view of Discharge Fluid Rectification Cover 2.
[FIG. 14] Figure 14 is a cross-sectional view of Discharge Fluid Rectification Cover 2 cut at line E-E in Figure 12.
[FIG. 15] Figure 15 illustrates how an object to be conveyed is suctioned by Conveyance Equipment 100.
[FIG. 16] Figure 16 is an oblique view of Conveyance Equipment 200 as viewed from above.
[FIG. 17] Figure 17 is an oblique view of Conveyance Equipment 200 as viewed from below.
[FIG. 18] Figure 18 is a plan view of Conveyance Equipment 200.
[FIG. 19] Figure 19 is a side view of Conveyance Equipment 200.
[FIG. 20] Figure 20 is a cross-sectional view of Conveyance Equipment 200 cut at line F-F in Figure 18.
[FIG. 21] Figure 21 is a cross-sectional view of Conveyance Equipment 200 cut at line G-G in Figure 18.
[FIG. 22] Figure 22 is a plan view of Swirl Flow-Forming Body 4.
[FIG. 23] Figure 23 is a cross-sectional view of Swirl Flow-Forming Body 4 cut at line H-H in Figure 22.
[FIG. 24] Figure 24 is a cross-sectional view of Swirl Flow-Forming Body 4 cut at line I-I in Figure 23.
[FIG. 25] Figure 25 is a plan view of Discharge Fluid Rectification Cover 2A.
[FIG. 26] Figure 26 shows a structure of Suction Device 10.

### MODES FOR CARRYING OUT THE INVENTION

### 1. First Embodiment

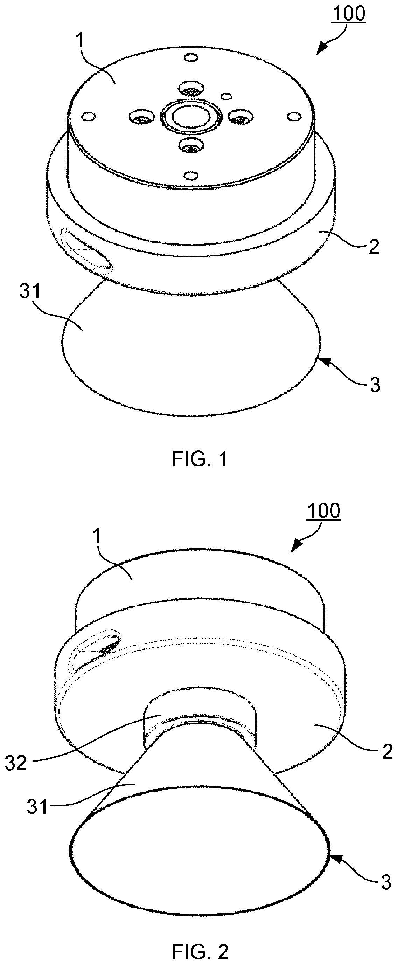

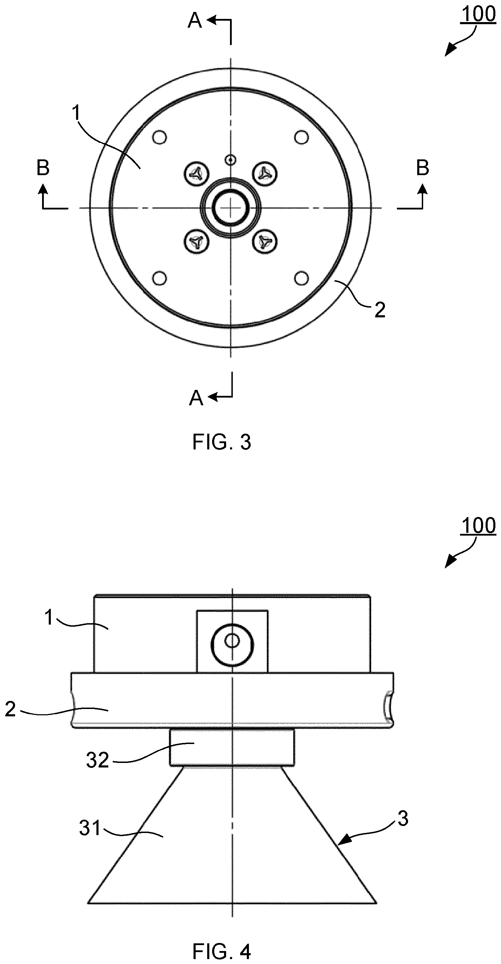

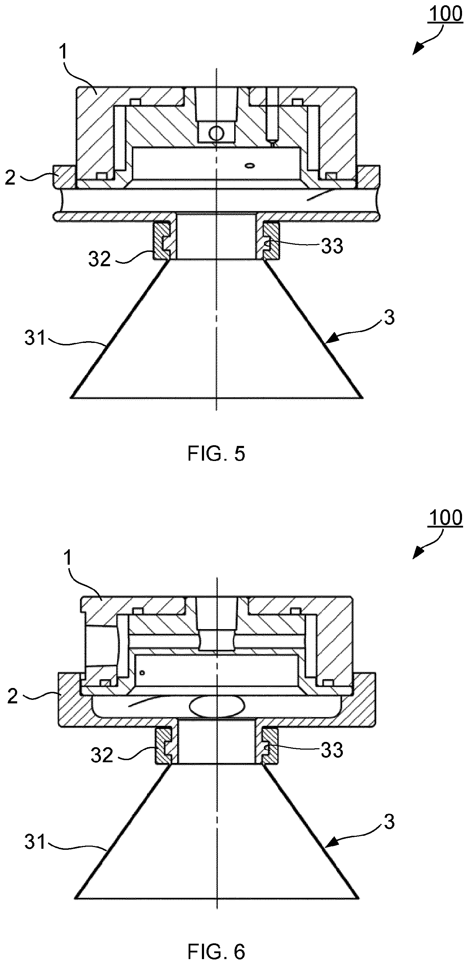

Conveyance Equipment 100 of the first embodiment of the present invention will now be described with reference to Figures 1 to 6. Figure 1 is an oblique view of Conveyance Equipment 100 as viewed from above. Figure 2 is an oblique view of Conveyance Equipment 100 as viewed from below. Figure 3 is a plan view of Conveyance Equipment 100. Figure 4 is a side view of Conveyance Equipment 100. Figure 5 is a cross-sectional view of Conveyance Equipment 100 cut at line A-A in Figure 3. Figure 6 is a cross-sectional view of Conveyance Equipment 100 cut at line B-B in Figure 3.

As shown in these figures, Conveyance Equipment 100 has Swirl Flow-Forming Body 1 which is a columnar member, Discharge Fluid Rectification Cover 2 which is a bottomed cylindrical member, and Skirt 3 which is a conical cylindrical member attached to the lower end of Discharge Fluid Rectification Cover 2. Conveyance Equipment 100 is a device for suctioning and conveying food products such as apple pieces, strawberries and so forth, and generally is used when attached to an end of a robot arm. Each component of Conveyance Equipment 100 will now be described below.

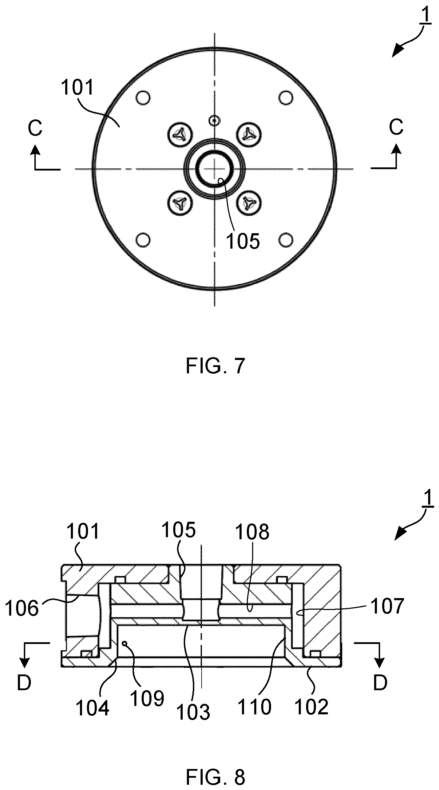

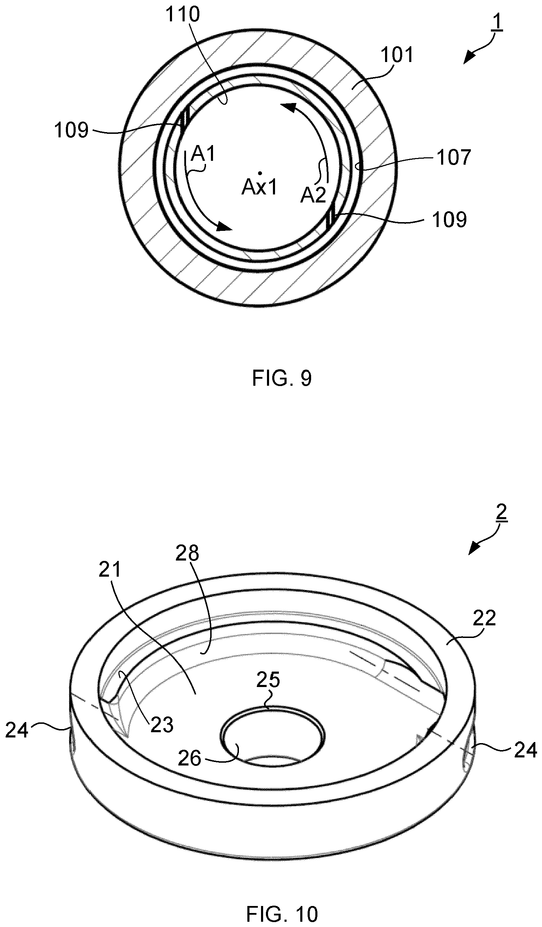

Swirl Flow-Forming Body 1 is now described with reference to Figures 7 to 9. Figure 7 is a plan view of Swirl Flow-Forming Body 1. Figure 8 is a cross-sectional view of Swirl Flow-Forming Body 1 cut at line C-C in Figure 7. Figure 9 is a cross-sectional view of Swirl Flow-Forming Body 1 cut at line D-D in Figure 8.

As shown in these figures, Swirl Flow-Forming Body 1 has Main Body 101 which is a columnar member. End Face 102 is a flat surface on the underside of Main Body 101. Recess 103 is a columnar space recessed from the center of End Face 102 to the inside of Main Body 101. Inclined Surface 104 is an inclined plane that is formed around the entire edge of the opening of Recess 103.

Top Supply Port 105 is formed in the center of the top surface of Main Body 101, and Side Supply Port 106 is formed on the side surface of Main Body 101. Circular Channel 107 is a channel formed around the entire circumference of Recess 103 and is connected to Side Supply Port 106. Connection Channel 108 is a linear channel that connects Circular Channel 107 and Top Supply Port 105. Fluid Passages 109 are a pair of passages with one end each connected to Circular Channel 107 and another end each open to Inside Surface 110 of Recess 103.

Each of Fluid Passages 109 is formed to extend generally tangential to Inside Surface 110, as shown in Figure 9. Each of Fluid Passages 109 is formed to extend vertically. Fluid Passages 109 are positioned point symmetrically about Central Axis Ax1 of Recess 103.

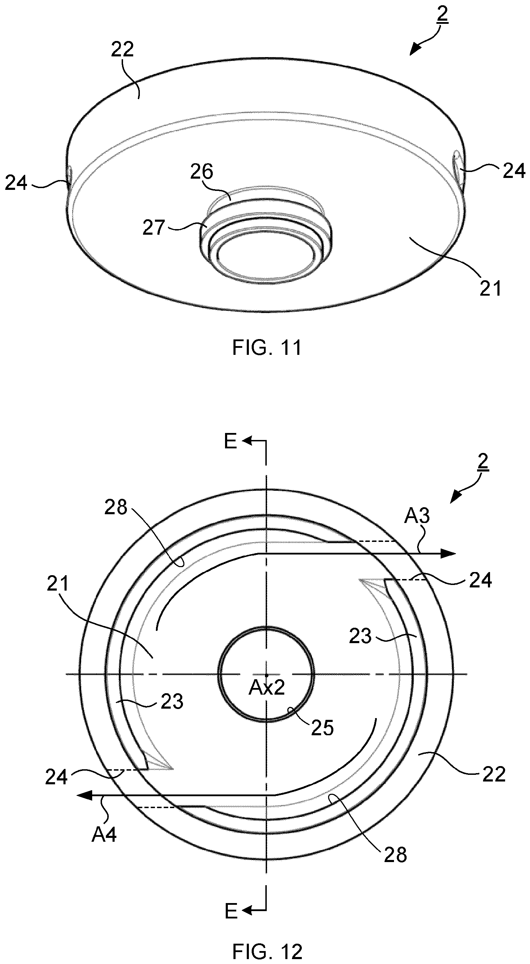

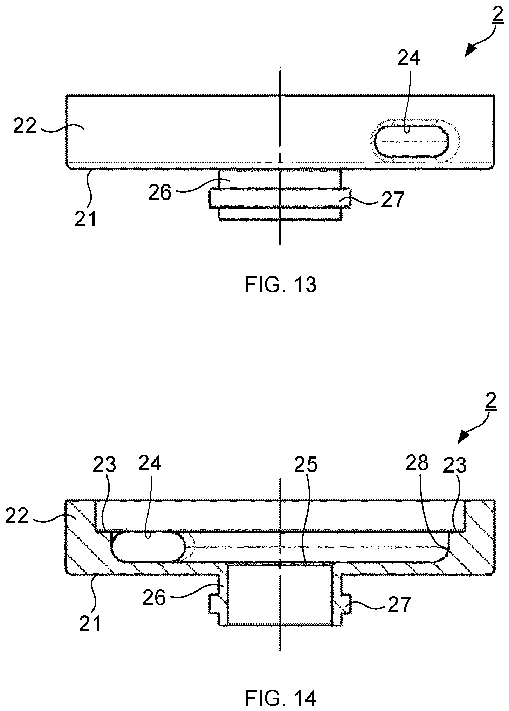

Discharge Fluid Rectification Cover 2 is now described with reference to Figures 10 to 14. Figure 10 is an oblique view of Discharge Fluid Rectification Cover 2 as viewed from above. Figure 11 is an oblique view of Discharge Fluid Rectification Cover 2 as viewed from below. Figure 12 is a plan view of Discharge Fluid Rectification Cover 2. Figure 13 is a side view of Discharge Fluid Rectification Cover 2. Figure 14 is a cross-sectional view of Discharge Fluid Rectification Cover 2 cut at line E-E in Figure 12.

As shown in the figures, Discharge Fluid Rectification Cover 2 has Bottom Plate 21, which is a disk-shaped member, and Perimeter Wall 22, which is a cylindrical member that extends from the periphery of Bottom Plate 21. Step 23 is a circular step formed on the inside surface of Perimeter Wall 22. In addition, a pair of Discharge Passages 24 are formed through Perimeter Wall 22. Suction Port 25 is a circular hole formed in the center of Bottom Plate 21. Discharge Fluid Rectification Cover 2 further has Cylindrical Part 26 that extends downward from the opening edge of Suction Port 25, and Circular Convexity 27, which is a circumferentially extending ring-shaped member provided on the outer surface of Cylindrical Part 26.

Each of Discharge Passages 24 is formed to extend generally tangential to Inside Surface 28 of Perimeter Wall 22, as shown in Figure 12. A direction of discharge of air from each of Discharge Passages 24 is along a direction in which the air is rectified in Perimeter Wall 22 (as depicted by Arrows A3 and A4 in Figure 12). Each of Discharge Passages 24 is formed to extend vertically. Discharge Passages 24 are positioned point symmetrically about the Central Axis Ax2 of the Perimeter Wall 22. Suction Port 25 of Discharge Fluid Rectification Cover 2 is smaller in diameter than Recess 103 of Swirl Flow-Forming Body 1, so as to prevent air flowing into Discharge Fluid Rectification Cover 2 from flowing out of Suction Port 25.

Skirt 3 is now described with reference to Figures 1 to 6. Skirt 3 has Skirt Main Body 31, which is a conical cylindrical member, and Cylindrical Part 32 connected to the upper end of Skirt Main Body 31, as shown in the figures. On the inside surface of Cylindrical Part 32, there is formed Recess 33, which is a circumferentially extending recess.

Skirt Main Body 31 is made of a thin film of silicone. Skirt Main Body 31 is made to be sufficiently long to wrap an entire object to be conveyed.

An example of an assembly procedure for Conveyance Equipment 100 is now described. First, Skirt 3 is attached to Discharge Fluid Rectification Cover 2 by inserting Cylindrical Part 32 of Skirt 3 into Cylindrical Part 26 of Discharge Fluid Rectification Cover 2 and engaging Circular Convexity 27 of Cylindrical Part 26 with Skirt 3.

Next, Discharge Fluid Rectification Cover 2 is attached to Swirl Flow-Forming Body 1 by fitting the lower end of Swirl Flow-Forming Body 1 onto Step 23 of Discharge Fluid Rectification Cover 2. When Discharge Fluid Rectification Cover 2 is attached to Swirl Flow-Forming Body 1, a positional relationship in plan view between Fluid Passages 109 of Swirl Flow-Forming Body 1 and Discharge Passages 24 of Discharge Fluid Rectification Cover 2 is not specified.

How Conveyance Equipment 100 works is now described. In the following description, it is assumed that Side Supply Port 106 of Swirl Flow-Forming Body 1 is sealed and air is supplied from Top Supply Port 105.

When air is supplied to Top Supply Port 105 via tubing from an air compressor not shown in the figures, the supplied air is discharged through Connection Channel 108, Circular Channel 107 and Fluid Passages 109 into Recess 103. The air discharged into Recess 103 is rectified by Inside Surface 110 of Recess 103 to form a swirling flow in Recess 103 (as depicted by Arrows A1 and A2 in Figure 9). The swirling flow reduces a density of air in the center of Recess 103 under action of centrifugal force. When Skirt 3 is placed over an object to be conveyed in this state, the object restricts a flow of external air into Recess 103 and further reduces an air density in the center of Recess 103. As a result, a negative pressure is generated in the center of Recess 103.

The negative pressure suctions the object in Skirt 3. The suctioned object is securely held against the edge of the lower opening of Cylindrical Part 32 of Skirt 3. The negative pressure also suctions Skirt Main Body 31 that covers the object to be conveyed. When Skirt Main Body 31 is suctioned it deforms with a shape of the object to be conveyed and adheres to the object. Adherence of Skirt Main Body 31 to the object to be conveyed prevents lateral displacement of the object. In addition, Skirt Main Body 31 increases a negative pressure in Recess 103 by further restricting flow of external air into Recess 103.

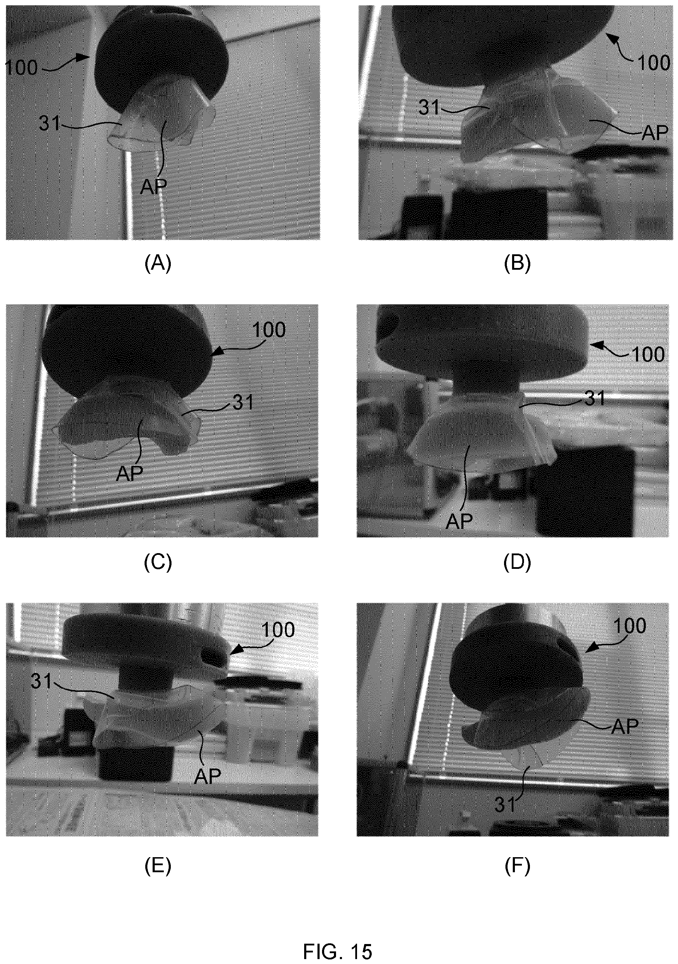

Figure 15 illustrates how an object to be conveyed is suctioned by Conveyance Equipment 100. The object to be conveyed (Object AP) shown in Figure 15 is wedge-shaped cut piece of an apple. Object AP is conveyed wrapped in Skirt Main Body 31, as shown in Figure 15. Skirt Main Body 31, which wraps Object AP, deforms with the shape of Object AP and adheres to Object AP.

The air that forms the swirl flow in Recess 103 flows out of Recess 103 along Inclined Surface 104 of Swirl Flow-Forming Body 1 and into Discharge Fluid Rectification Cover 2. The air flowing into Discharge Fluid Rectification Cover 2 is discharged from Discharge Passages 24 while being rectified by Inside Surface 28 of Discharge Fluid Rectification Cover 2 (as depicted by Arrows A3 and A4 in Figure 12).

Effects of Conveyance Equipment 100 are now described. The inventors of the present application conducted experiments to compare a performance of Conveyance Equipment 100 of this embodiment and Suction Device 10 disclosed in Patent Document 1 described as the background technology. The experiments showed that when an air flow rate was 25 slm (standard liter/min), the negative pressure of Conveyance Equipment 100 was about 1.9 times higher than that of Suction Device 10. The experiments also showed that when an air flow rate was 50 slm, the negative pressure of Conveyance Equipment 100 was about 1.5 times higher than that of Suction Device 10.

The structure of Discharge Fluid Rectification Cover 2 is posited as a reason why Conveyance Equipment 100 imparts a higher negative pressure than Suction Device 10. As described above, Discharge Fluid Rectification Cover 2 has a pair of Discharge Passages 24, from which air is discharged. In contrast, Case 12 of Suction Device 10 has an annular opening formed on its top surface and air is discharged from the entire circumference of the opening. Thus, Discharge Fluid Rectification Cover 2 has a narrower air discharge path as compared to Case 12. As a result, a flow of external air into Recess 103 is limited to a greater extent by Discharge Fluid Rectification Cover 2 as compared to Suction Device 10. Consequently, Discharge Fluid Rectification Cover 2 generates a higher negative pressure in Recess 103 as compared Suction Device 10.

The provision of Skirt 3 is posited as another reason why Conveyance Equipment 100 generates a higher negative pressure than Suction Device 10. As described above, Skirt Main Body 31 of Skirt 3 deforms with the shape of the object to be conveyed and adheres to the object. Skirt Main Body 31, which is in close contact with the object to be conveyed, further restricts a flow of external air into Recess 103, and as a result, a negative pressure in Recess 103 increases.

### 2. Second Embodiment

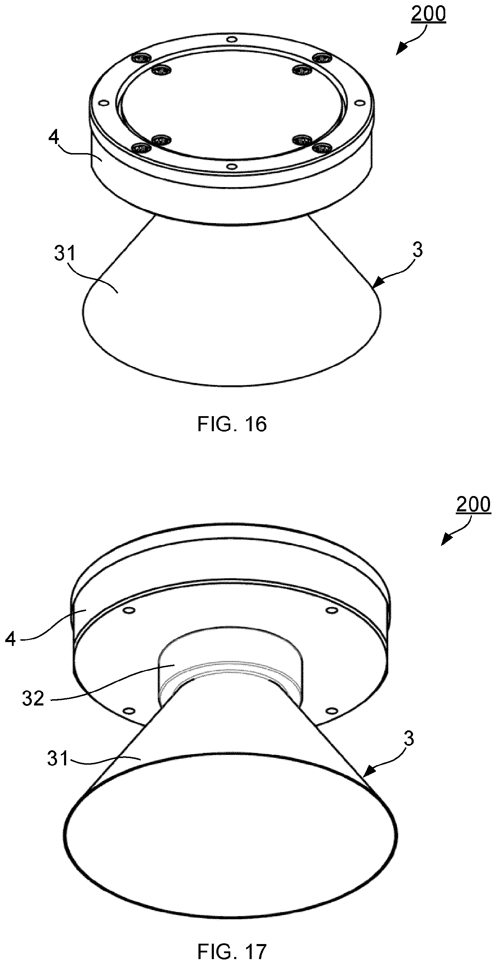

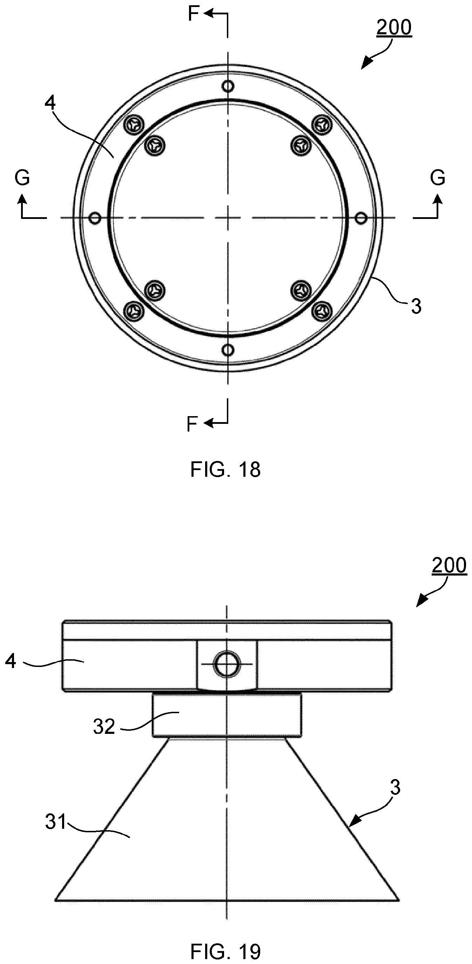

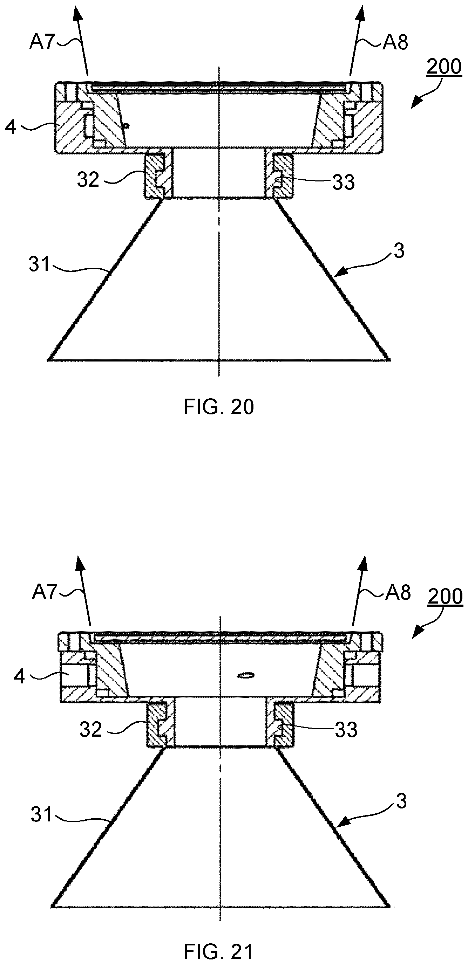

Conveyance Equipment 200 of the second embodiment of the present invention will now be described with reference to Figures 16 to 21. Figure 16 is an oblique view of Conveyance Equipment 200 as viewed from above. Figure 17 is an oblique view of Conveyance Equipment 200 as viewed from below. Figure 18 is a plan view of Conveyance Equipment 200. Figure 19 is a side view of Conveyance Equipment 200. Figure 20 is a cross-sectional view of Conveyance Equipment 200 cut at line F-F in Figure 18. Figure 21 is a cross-sectional view of Conveyance Equipment 200 cut at line G-G in Figure 18.

As shown in the figures, Conveyance Equipment 200 has Swirl Flow-Forming Body 4 which is a columnar member and Skirt 3 which is a conical cylindrical member attached to the lower end of Swirl Flow-Forming Body 4. Conveyance Equipment 200 is a device used for suctioning and conveying food products such as apple pieces, strawberries and so forth, and generally is used when attached to an end of a robot arm. The configuration of Skirt 3 is the same as that of Skirt 3 in the first embodiment, and therefore repeat description is omitted here. Swirl Flow-Forming Body 4 will be described below.

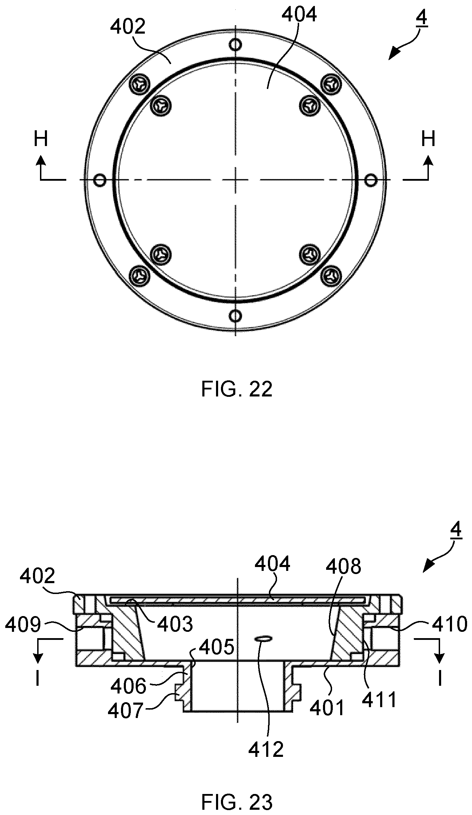

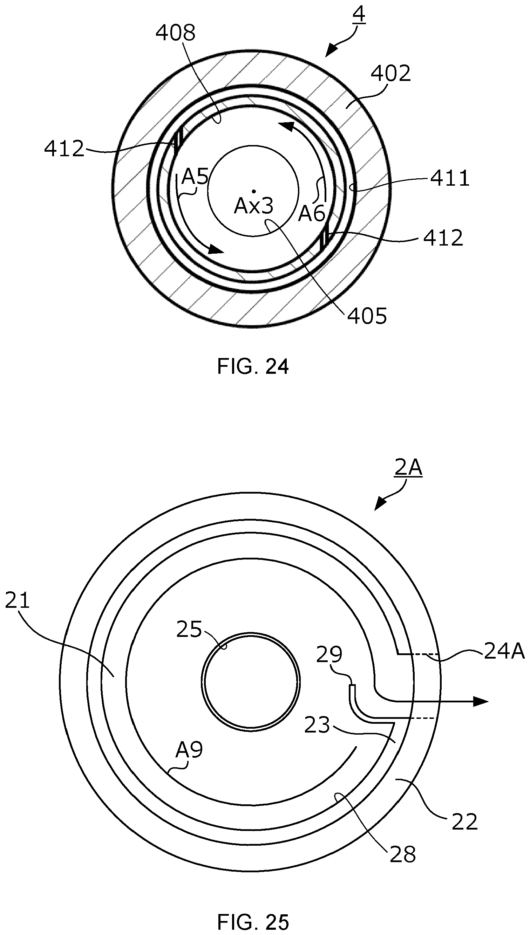

Figures 22 to 24 show the structure of Swirl Flow-Forming Body 4. Figure 22 is a plan view of Swirl Flow-Forming Body 4. Figure 23 is a cross-sectional view of Swirl Flow-Forming Body 4 cut at line H-H in Figure 22. Figure 24 is a cross-sectional view of Swirl Flow-Forming Body 4 cut at line I-I in Figure 23.

As shown in these figures, Swirl Flow-Forming Body 4 has Bottom Plate 401, which is a disk-shaped member, and Perimeter Wall 402, which is a cylindrical member that extends from the periphery of Bottom Plate 401. Step 403 is a circular step that is formed on the inside surface of Perimeter Wall 402. Swirl Flow-Forming Body 4 also has Lid 404 which is a disc-shaped member fitted inside Perimeter Wall 402 above Step 403. Suction Port 405 is a circular shaped and is formed in the center of Bottom Plate 401. Suction Port 405 is a circular hole and is formed in the center of Bottom Plate 401. Swirl Flow-Forming Body 4 further has Cylindrical Part 406 that extends downward from the opening edge of Suction Port 405, and Circular Convexity 407 which is a circumferentially extending ring-shaped member provided on the outer surface of Cylindrical Part 406.

The diameter of Inside Surface 408 of Perimeter Wall 402 gradually increases in an upward direction. Lid 404 is attached above Step 403 with a gap therebetween. The air discharged into Perimeter Wall 402 is discharged through the gap formed between Lid 404 and Step 403. Suction Port 405 of Swirl Flow-Forming Body 4 is smaller in diameter than the inside diameter of Perimeter Wall 402. This is to prevent air discharged inside Perimeter Wall 402 from flowing out of Suction Port 405.

First Supply Port 409 and Second Supply Port 410 are formed outside Perimeter Wall 402 in Swirl Flow-Forming Body 4. Circular Channel 411 and a pair of Fluid Passages 412 are also formed in Swirl Flow-Forming Body 4. Circular Channel 411 is a channel formed around the entire circumference of Inside Surface 408 and is connected to First Supply Port 409 and Second Supply Port 410. At one end each the pair of Fluid Passages 412 is connected to Circular Channel 411 and at another end each opens to Inside Surface 408.

Each of Fluid passages 412 is formed to extend generally tangential to Inside Surface 408, as shown in Figure 24. Each of Fluid Passages 412 extends vertically. Fluid Passages 412 are arranged point symmetrically about Central Axis Ax3 of Perimeter Wall 402.

Skirt 3 is attached to the lower end of Swirl Flow-Forming Body 4. When Skirt 3 is attached to Swirl Flow-Forming Body 4, Cylindrical Part 32 of Skirt 3 is inserted into Cylindrical Part 406 of Swirl Flow-Forming Body 4, and Recess 33 is engaged with Circular Convexity 407 of Cylindrical Part 406.

How Conveyance Equipment 200 works is now described. In the following description, it is assumed that Second Supply Port 410 of Swirl Flow-Forming Body 4 is sealed and air is supplied from First Supply Port 409.

When air is supplied to First Supply Port 409 via tubing from an air compressor not shown in the figures, the supplied air is discharged through Circular Channel 411 and Fluid Passages 412 into Perimeter Wall 402. The air discharged into Perimeter Wall 402 is rectified by Inside Surface 408 to form a swirling flow in Perimeter Wall 402 (as depicted by Arrows A5 and A6 in Figure 24). The swirling flow reduces a density of air in the center of Perimeter Wall 402 under action of centrifugal force. When Skirt 3 is placed over the object to be conveyed in this state, the object restricts the flow of external air into Perimeter Wall 402, further reducing an air density in the center of Perimeter Wall 402. As a result, a negative pressure is generated in the center of Perimeter Wall 402.

The negative pressure suctions the object in Skirt 3. The suctioned object is securely held against the edge of the lower opening of Cylindrical Part 32 of Skirt 3. The negative pressure also suctions Skirt Main Body 31 that covers the object to be conveyed. When Skirt Main Body 31 is suctioned it deforms with the shape of the object to be conveyed and adheres to it. Adherence of Skirt Main Body 31 to the object to be conveyed prevents lateral displacement of the object. In addition, Skirt Main Body 31 increases a negative pressure in Perimeter Wall 402 by further restricting a flow of external air into Perimeter Wall 402.

The air that forms the swirling flow in Perimeter Wall 402 flows upward along Inside Surface 408 and is discharged through the gap between Step 403 and Lid 404 (as depicted by Arrows A7 and A8 in Figure 20 and Figure 21).

As described above, Conveyance Equipment 200 has Skirt 3. Skirt Main Body 31 of Skirt 3 deforms with the shape of the object to be conveyed and adheres to the object. Skirt Main Body 31, which is in contact with the object to be conveyed, further restricts a flow of external air into Perimeter Wall 402. As a result, a negative pressure inside Perimeter Wall 402 increases.

### 3. Modifications

The embodiments described above may be modified as described below. It is of note that two or more of the modifications described below may be combined.

### 3-1. Modification 1

An object to be conveyed by Conveyance Equipment 100 or Conveyance Equipment 200 is not limited to a food product, and Conveyance Equipment 100 or Conveyance Equipment 200 may be used to convey non-food objects.

### 3-2. Modification 2

Liquids such as pure water or carbonated water may be used in place of air as a fluid for use in Conveyance Equipment 100 or Conveyance Equipment 200.

### 3-3. Modification 3

The shape of Swirl Flow-Forming Body 1 and Swirl Flow-Forming Body 4 is not limited to a cylindrical shape. For example, the shape of Swirl Flow-Forming Body 1 or Swirl Flow-Forming Body 4 may be elliptical or prismatic.

### 3-4. Modification 4

The number of pairs of Fluid Passages 109 in Swirl Flow-Forming Body 1 is not limited to a single pair. The number of pairs of Fluid Passages 109 may be changed depending on a cross-sectional area and an air flow rate of Fluid Passages 109. Similarly, a number of pairs of Fluid Passages 412 in Swirl Flow-Forming Body 4 may be changed depending on a cross-sectional area and air flow rate.

### 3-5. Modification 5

Fluid Passages 109 in Swirl Flow-Forming Body 1 need not be arranged in point symmetry about Central Axis Ax1 of Recess 103. Similarly, Fluid Passages 412 in Swirl Flow-Forming Body 4 need not be arranged in point symmetry about Central Axis Ax3 of Perimeter Wall 22.

### 3-6. Modification 6

The number of Discharge Passages 24 in Discharge Fluid Rectification Cover 2 is not limited to two. The number of Discharge Passages 24 may be changed depending on a cross-sectional area and an air flow rate of Discharge Passages 24.

Discharge Passages 24 of Discharge Fluid Rectification Cover 2 need not be formed to extend vertically, and may be formed to extend at an angle.

Discharge Passages 24 of Discharge Fluid Rectification Cover 2 need not be arranged in point symmetry about Central Axis Ax2 of Perimeter Wall 22.

Discharge Passages 24 of the Discharge Fluid Rectification Cover 2 need not be formed to extend generally tangential to Inside Surface 28 of the Perimeter Wall 22. For example, Discharge Passages 24 may be formed to extend in a generally radial direction of Inside Surface 28. Description is given below of Discharge Passages 24A that extend in a generally radial direction of Inside Surface 28, with reference to Figure 25. Figure 25 is a plan view of Discharge Fluid Rectification Cover 2A which has Discharge Passages 24A.

As shown in Figure 25, Discharge Fluid Rectification Cover 2A has Discharge Passages 24A instead of Discharge Passages 24 of Discharge Fluid Rectification Cover 2. Discharge Passages 24A are formed on Perimeter Wall 22 to extend in a generally radial direction of Inside Surface 28, as described above.

Discharge Fluid Rectification Cover 2A differs from Discharge Fluid Rectification Cover 2 in that it has Guide Wall 29, which is a L-shaped member that extends from Bottom Plate 21. In plan view, Guide Wall 29 has its base connected to the inner opening edge of Discharge Passages 24A and its tip positioned between Discharge Passages 24A and Suction Port 25. Guide Wall 29 guides air flowing in Discharge Fluid Rectification Cover 2A to Discharge Passages 24A, as depicted by Arrow A9 in Figure 25.

The combination of Discharge Passages 24A and Guide Wall 29 described above also allows air flowing inside Discharge Fluid Rectification Cover 2A to be smoothly discharged.

### 3-7. Modification 7

The shape of Suction Port 25 of Discharge Fluid Rectification Cover 2 is not limited to a circular shape. For example, the shape of Suction Port 25 may be oval or rectangular. Similarly, the shape of Suction Port 405 of Swirl Flow-Forming Body 4 is not limited to a circular shape.

The size of Suction Port 25 may be changed depending on a size of an object to be conveyed. Similarly, a size of Suction Port 405 of the Swirl Flow-Forming Body 4 may be changed depending on a size of an object to be conveyed.

### 3-8. Modification 8

Swirl Flow-Forming Body 1 and Discharge Fluid Rectification Cover 2 may be molded as a single piece. For example, a conveying device formed by molding has a columnar member, and a columnar recess is formed to face inward from the lower end face of the columnar member. In addition, a pair of fluid passages that supply fluid into the recess to form a swirling flow are formed to extend generally tangential to the inner surface of the columnar recess. Furthermore, the conveying device has a disk-shaped bottom plate and a peripheral wall that extends around the periphery of the base plate to cover the recess. A suction port is formed in the bottom plate. An outlet passage is formed in the peripheral wall to extend generally tangential to the inner surface of the peripheral wall.

### 3-9. Modification 9

Skirt 3 may be made of an elastic material other than silicone.

The thickness of Skirt Main Body 31 of Skirt 3 may be changed depending on the material of Skirt Main Body 31. Regardless of the material, the thickness should be such that Skirt Main Body 31 is able to deform with the shape of an object to be conveyed.

The conical cylindrical shape of Skirt Main Body 31 is a versatile shape, but this shape does not necessarily have to be adopted. Namely, the shape of Skirt Main Body 31 may be modified to accommodate a shape of an object to be conveyed. For example, if the object to be conveyed has an asymmetrical shape, the shape of Skirt Main Body 31 may be asymmetrical.

The Skirt Main Body 31 need not necessarily be sufficiently long to wrap the entire object to be conveyed. Namely, depending on a shape and weight of an object to be transported, the length may one that is sufficient to wrap only a portion of the object.

Skirt 3 may be attached to Discharge Fluid Rectification Cover 2 by a method other than by engaging Recess 33 of Skirt 3 and Circular Convexity 27 of Discharge Fluid Rectification Cover 2. For example, Skirt 3 may be screwed to the underside of Discharge Fluid Rectification Cover 2. Similarly, Skirt 3 may be attached to Swirl Flow-Forming Body 4 by a method other than by engaging Recess 33 of Skirt 3 and Circular Convexity 407 of Swirl Flow-Forming Body 4.

### 3-10. Modification 10

Conveyance Equipment 100 need not have Skirt 3. Depending on a material and a shape of an object to be conveyed by Conveyance Equipment 100, the object may be conveyed without Skirt 3. When Skirt 3 is not used, Discharge Fluid Rectification Cover 2 need not have Cylindrical Part 26 to attach Skirt 3.

### DESCRIPTION OF REFERENCE NUMERALS

1: Swirl Flow-Forming Body
2: Discharge Fluid Rectification Cover
3: Skirt
4: Swirl Flow-Forming Body
10: Suction Device 10
11: Swirl Flow-Forming Body
12: Case
21: Bottom Plate
22: Perimeter Wall
23: Step
24, 24A: Discharge Passages
25: Suction Port
26: Cylindrical Part
27: Circular Convexity
28: Inside Surface
29: Guide Wall
31: Skirt Main Body
32: Cylindrical Part
33: Recess
100: Conveyance Equipment
101: Main Body
102: End Face
103: Recess
104: Inclined Surface
105: Top Supply Port
106: Side Supply Port
107: Circular Channel
108: Connection Channel
109: Fluid Passages
110: Inside Surface
200: Conveyance Equipment
401: Bottom Plate
402: Perimeter Wall
403: Step
404: Lid
405: Suction Port
406: Cylindrical Part
407: Circular Convexity
408: Inside Surface
409: First Supply Port
410: Second Supply Port
411: Circular Channel
412: Fluid Passages

## Claims

1. Conveyance equipment comprising:
a swirl flow-forming body which forms a swirl flow of fluid, and
a cover attached to a lower end of the swirl flow-forming body which rectifies a discharged fluid,
wherein
the swirl flow-forming body has a first body which is a columnar member,
a columnar recess provided inward of a lower end face of the first body,
a pair of fluid passages that extend generally tangential to an inside surface of the columnar recess,
the swirl flow-forming body forms a swirl flow of fluid by discharging fluid into the columnar recess through the pair of fluid passages,
the cover has a second body composed of a disk-shaped bottom plate and a cylindrical member that extends from a periphery of the bottom plate to cover the columnar recess,
a suction port provided in the bottom plate, and
a discharge passage that extends generally tangential to the inside surface of the cylindrical member of the second body.

2. Conveyance equipment comprising:
a swirl flow-forming body which forms a swirl flow of fluid, and
a cover attached to a lower end of the swirl flow-forming body which rectifies discharged fluid,
wherein
the swirl flow-forming body has a first body which is a columnar member,
a columnar recess provided inward of a lower end face of the first body,
a pair of fluid passages that extend generally tangential to an inside surface of the columnar recess,
the swirl flow-forming body forms a swirl flow of fluid by discharging fluid into the columnar recess through the pair of fluid passages,
the cover has a second body composed of a disk-shaped bottom plate and a cylindrical member that extends from a periphery of the bottom plate to cover the columnar recess,
a suction port provided in the bottom plate, and
a discharge passage that extends in a generally radial direction of the inside surface of the cylindrical member of the second body,
further comprising:
a guide wall which is an L-shaped wall that extends from the bottom plate, a base of which is connected to an inner opening edge of the discharge passage and a tip of which is positioned between the discharge passage and the suction port to guide fluid flowing in the second body into the discharge passage.

3. Conveyance equipment comprising:
a columnar member,
wherein
a columnar recess is provided inward of a lower end face of the columnar member, and
a pair of fluid passages which supply fluid into the columnar recess to form a swirling flow extend generally tangential to the inside surface of the columnar recess,
further comprising a disk-shaped bottom plate, and a peripheral wall that extends around a periphery of the base plate to cover the columnar recess,
wherein
a suction port is provided in the bottom plate, and
an outlet passage is provided in the peripheral wall to extend generally tangential to the inside surface of the peripheral wall.

4. The conveyance equipment according to any one of Claims 1 to 3, further comprising:
a cylindrical skirt made of an elastic thin film, an upper opening of which is connected to the suction port.

5. Conveyance equipment comprising:
a swirl flow-forming body which forms a swirl flow of fluid, and
a skirt attached to a lower end of the swirl flow-forming body,
wherein
the swirl flow-forming body is comprised of a disk-shaped base plate, a cylindrical peripheral wall that extends around a periphery of the bottom plate, and a lid which covers an upper opening of the cylindrical peripheral wall with a gap between the lid and the cylindrical peripheral wall,
a suction port provided in the bottom plate,
a pair of fluid passages that extend generally tangential to an inside surface of the cylindrical peripheral wall and supply fluid into the cylindrical peripheral wall to form a swirling flow, and
the skirt is a cylindrical member made of an elastic thin film, a top opening of which is connected to the suction port.

6. The conveyance equipment according to Claim 4 or 5, wherein
the skirt is conical cylindrical.

7. The conveyance equipment according to any one of Claims 4 to 6, wherein
the skirt is of sufficient length to wrap an entire object to be conveyed.

8. A cover attached to a lower end of a swirl flow-forming body
which comprises a first body, comprising:
a second body,
wherein
the first body is columnar,
a columnar recess is provided inward of a lower end face of the first body, and
a pair of fluid passages which supply fluid into the columnar recess to form a swirling flow extend generally tangential to the inside surface of the columnar recess,
the second body comprises a disk-shaped bottom plate, and a peripheral wall that extends around a periphery of the base plate to cover the columnar recess,
a suction port provided in the bottom plate, and
an outlet passage provided in the peripheral wall to extend generally tangential to the inside surface of the peripheral wall.

9. A cover attached to a lower end of a swirl flow-forming body
which comprises a first body, comprising:
a second body, and
a guide wall,
wherein
the first body is columnar,
a columnar recess is provided inward of a lower end face of the first body, and
a pair of fluid passages which supply fluid into the columnar recess to form a swirling flow extend generally tangential to the inside surface of the columnar recess,
the second body comprises a disk-shaped bottom plate, and a peripheral wall that extends around a periphery of the base plate to cover the columnar recess,
a suction port provided in the bottom plate,
an outlet passage provided in the peripheral wall to extend generally tangential to the inside surface of the peripheral wall, and
the guide wall is an L-shaped wall that extends from the bottom plate, a base of which is connected to an inner opening edge of the discharge passage and a tip of which is positioned between the discharge passage and the suction port to guide fluid flowing in the second body into the discharge passage.

10. A skirt attached to a lower end of a cover attached to a lower end of a swirl flow-forming body, wherein
the swirl flow-forming body comprises a first body which is columnar,
a columnar recess provided inward of a lower end face of the first body,
a pair of fluid passages which supply fluid into the columnar recess to form a swirling flow extend generally tangential to the inside surface of the columnar recess,
the cover comprises a second body which is composed of a disk-shaped bottom plate, and a peripheral wall that extends around a periphery of the base plate to cover the columnar recess,
a suction port is provided in the bottom plate,
an outlet passage provided in the peripheral wall extends generally tangential to the inside surface of the peripheral wall, and
the skirt is a cylindrical member made of an elastic thin film, a top opening of which is connected to the suction port.

11. A skirt attached to a lower end of a swirl flow-forming body which forms a swirl flow of fluid,
wherein
the swirl flow-forming body is comprised of a disk-shaped base plate, a cylindrical peripheral wall that extends around a periphery of the bottom plate, and a lid which covers an upper opening of the cylindrical peripheral wall with a gap between the lid and the cylindrical peripheral wall,
a suction port is provided in the bottom plate,
a pair of fluid passages extend generally tangential to an inside surface of the cylindrical peripheral wall and supply fluid into the cylindrical peripheral wall to form a swirling flow, and
the skirt is a cylindrical member made of an elastic thin film, a top opening of which is connected to the suction port.
